# EUROPEAN PATENT SPECIFICATION

(11) **EP 3 216 678 B1**
(45) Date of publication and mention of the grant of the patent: **08.05.2019**
(21) Application number: 17159075.5
(22) Date of filing: 03.03.2017
(51) Int. Cl.: B62D 25/16, B60R 19/18, B60R 19/24

(54) **SUPPORT SYSTEM FOR A FRONTAL STRUCTURE OF A VEHICLE**
STÜTZSYSTEM FÜR EINEN FRONTAUFBAU EINES FAHRZEUGS
SYSTÈME DE SUPPORT POUR UNE STRUCTURE AVANT D'UN VÉHICULE

(30) Priority: 07.03.2016 ES 201630264
(43) Date of publication of application: 13.09.2017
(73) Proprietor: Seat, S.A., 08760 Martorell - Barcelona (ES)
(72) Inventor: SEGURA SANTILLANA, Angel, 08760 MARTORELL (Barcelona) (ES); GARCIA SANCHEZ, Juan Antonio, 08760 MARTORELL (Barcelona) (ES)
(74) Representative: Ponti & Partners, S.L.P

(56) References cited:
- EP-A1- 2 596 994
- WO-A1-2012/066723
- DE-A1-102011 013 382
- US-A1- 2009 302 627

## Description

The present invention relates to a support system for a frontal structure of a vehicle that enables a mudguard, a body and a bumper of a vehicle to be joined together.

### Background to the invention

In modern vehicles such as motor cars or lorries, two or more strengthening elements are commonly used to create a mechanical link between two external parts, said parts playing an important role in the external design of the vehicle, with the structure or chassis of the vehicle. More specifically, at least one strengthening part is used to create the mechanical link between the bumper and the body, and at least one other strengthening part to create the mechanical link between the mudguard and the body of the vehicle.

To improve the thickness characteristics and to reduce the number of parts used and the related tolerances, solutions have been developed to combine the strengthening elements into a single element that enables the body, bumper and mudguard of the vehicle to be joined together.

One such solution is described in document US8801056, which describes a single joining element that enables the mudguard and the bumper to be joined together, while creating a mechanical link with the body by means of a single joining means. In this case specifically, both the mudguard and the bumper are made of plastic, and consequently the linking component is also made of plastic. The primary function of said solution is to improve the clearance and flushing in the overlapping zone between the bumper and the mudguard, reducing the tolerances in the clearance as seen from the outside. This document is not intended to improve the rigidity or stress resistance of the frontal structure of the vehicle.

Another solution is described in document US2014035991, which describes a strengthening element for joining four components: an upper bodywork element, a frontal element, a mudguard and a shock absorber cover. However, in this solution, the strengthening element comprises three elements: a main supporting element, an auxiliary supporting element and an attachment element that are joined together by welding and screwing, which has the drawback of increasing tolerances and complicating assembly.

DE102011013382 A1 discloses a motor vehicle having a fender and a bumper module. An edge flange of the fender is fastened on fixed support. A guide profile is provided on the fender edge flange and fastened with bumper module.

Consequently, the objective of the present invention is to provide a support system for a frontal structure of a vehicle that is thinner and therefore lighter, that improves tolerances and that satisfies pedestrian-impact deformation requirements, and that enables a metal mudguard, a vehicle body and a bumper to be joined together using a single strengthening element.

### Description of the invention

The support system according to the invention addresses the drawbacks cited and offers other advantages, as described below.

The support system according to the present invention for a frontal structure of a vehicle in which the vehicle has a body, a bumper and a mudguard, in which the mudguard is made of metal, and in which the support system comprises strengthening means for joining the mudguard to the body of the vehicle, in which the strengthening means also joins the bumper to the body of the vehicle, and in which the strengthening means is made from a single piece. Consequently, in a vehicle having a bumper made of plastic and a mudguard made of metal, it is advantageously possible to join both components to the body of the vehicle. When doing so, the rigidity requirements of the zone must be satisfied and both components must be supported, specifically by joining same to the struts of the vehicle.

Advantageously, the strengthening means is made of metal. Thus, in order to satisfy the rigidity requirements of the components involved, specifically the rigidity requirements of a metal mudguard, the strengthening means must also be made of metal. In particular, the mudguard is a part liable to receive pressure or contact of considerable force, as a result of which said component must be made of metal. Consequently, the linking of the forces received by said metal mudguard, and the transmission and absorption of vibrations towards the body of the vehicle must be done by metal strengthening means.

The strengthening means comprises a central sector and the strengthening means is joined to the body of the vehicle by the central sector. Thus, the central sector is an essentially flat surface that enables a suitable distribution of forces in the link between the struts of the vehicle body and the strengthening means. A strut is a bodywork element located above a longitudinal member whose main function is to absorb energy in the event of a frontal impact.

Moreover, in a preferred embodiment, the strengthening means comprises a lower sector, in which the lower sector is positioned beside the central sector such that the bumper and the mudguard are preferably joined to the strengthening means via the lower sector. It should nonetheless be noted that the bumper and the mudguard may be joined to the strengthening means by different lower sectors, since they need not be joined at the same lower join. Advantageously, in a preferred embodiment, the link between the three components is made in the same zone, this zone being the lower sector.

Furthermore, the lower sector and the central sector preferably lie along mutually intersecting surfaces and together form an obtuse angle. This provides additional rigidity between both sectors of the strengthening means, which may be subjected to significant sporadic forces.

Advantageously, the mudguard has an outer surface, arranged such that the lower sector is substantially perpendicular to the outer surface of the mudguard, in the joining zone between the mudguard and the strengthening means, and the bumper has an outer surface, arranged such that the lower sector is substantially perpendicular to the outer surface of the bumper, in the joining zone between the bumper and the strengthening means. This feature enables flaps on the bumper and on the mudguard to be joined to the lower sector. Both the flaps and the lower sector are perpendicular to the outer surfaces of the bumper and the mudguard, which ensures the correct overlap between the bumper and the mudguard, minimizing the clearance between said two components, improves the fit and facilitates the assembly process for both parts.

Also according to said embodiment, the strengthening means comprises an upper sector, in which the upper sector is positioned beside the central sector in a zone of the central sector opposite the lower sector, and the mudguard is also joined to the strengthening means by the upper sector. This provides a second joining zone between the metal mudguard and the body of the vehicle, better distributing the forces received by the strengthening means.

Furthermore, the strengthening means comprises a structural element arranged in the central sector and in the lower sector. For example, the structural element is a profile arranged along the central sector and the lower sector. This profile is intended to prevent bending between the central sector and the lower sector. Such bending may occur if the mudguard is subjected to a force in a direction perpendicular to the direction of forward movement of the vehicle. The profile provides the rigidity required to oppose said force and to prevent bending between the two intersecting sectors.

Said strengthening means may also advantageously comprise at least one controlled breaking zone positioned between the central sector and the upper sector, such as a fold that is substantially horizontal or parallel to the struts of the vehicle body, or parallel to the bonnet. This point is particularly advantageous since the mudguard is made of metal. In the event of an impact in a vertical direction with a pedestrian, for example with a pedestrian's head, it is important that the strengthening means is not an entirely rigid element, which would result in excessively abrupt deceleration for the pedestrian. To ensure this, the controlled breaking zone enables the mudguard and the supporting means to deform and to absorb part of the energy of the impact, and is thus advantageous in terms of pedestrian safety.

Furthermore, the upper sector preferably has at least one horizontal tab that is substantially perpendicular to the central sector, and the mudguard is joined to the strengthening means using the at least one horizontal tab. This minimizes the surface area of the strengthening means in the upper sector, and the design comprises only zones that are essentially flat and perpendicular to the central sector to make the link between the mudguard and the supporting means, at the upper join between both.

The join between the bumper and the strengthening means in the lower sector is preferably made using an intermediate part. Said intermediate element is required to optimize the transmission of forces between a metal component and a plastic component. Consequently, there is a join between three components: the metal mudguard, the plastic bumper and the metal strengthening means. Consequently, the weakest component is the plastic bumper. To achieve this, an intermediate part made of plastic is inserted between the flap of the bumper and the lower sector of the strengthening means to ensure the transition and uniform distribution of forces along the entire plastic surface or flap of the bumper.

According to a preferred embodiment, the join between the strengthening means and the body of the vehicle, the join between the strengthening means and the bumper, and the join between the strengthening means and the mudguard are made using at least one screwed join, satisfying the requirements in terms of rigidity and the forces to be withstood by said joining means, as well as facilitating the assembly process.

With regard to the solutions currently in use, the support system according to the present invention minimizes the number of joins required to join the three parts together (mudguard, body and bumper), thereby improving assembly, reducing costs and satisfying the technical requirements relating to the characteristic forces of the frontal zone of the vehicle.

Furthermore, it enables attachment via the upper zone of the mudguard, with metal directly on metal, for example by means of a screwed join.

### Short description of the figures

The attached schematic drawings show a practical embodiment and are provided by way of nonlimiting example to aid comprehension of the foregoing.
Figure 1 is a perspective view of the strengthening means comprised in the support system for a frontal structure according to the present invention,
Figure 2 is a perspective view of the support system according to the present invention, and
Figure 3 is a cross section of the support system according to the present invention.

### Description of a preferred embodiment

Firstly, it should be noted that for reasons of simplicity in this description and in the claims, some elements are defined as "upper" or "lower These terms refer to the normal usage position in a vertical direction within the support system for a frontal structure on a vehicle.

The support system according to the present invention is used to join together the body 7, the bumper 8 and the mudguard 9 of the vehicle such as a motor car, using a single piece (strengthening means 1).

Said mudguard 9 is made of metal, as is said strengthening means 1, thereby forming a metal-on-metal join, unlike the aforementioned conventional support system.

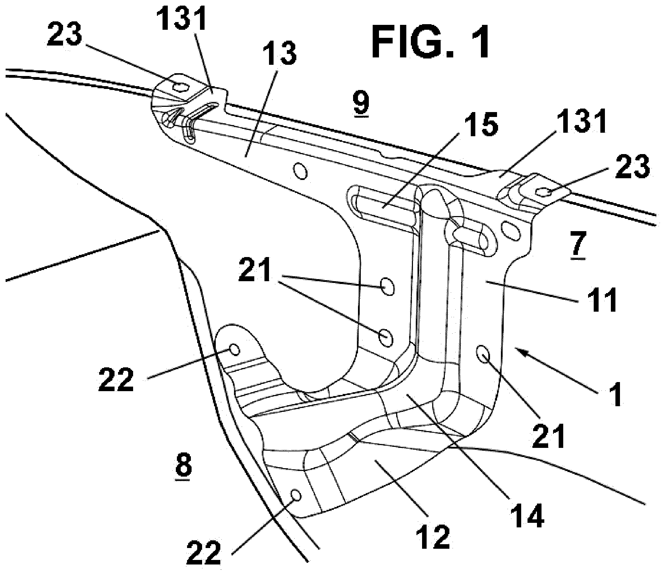

The strengthening means 1 comprises a central sector 11, a lower sector 12 and an upper sector 13, as shown in Figure 1.

The central sector 11 essentially comprises a flat surface, is located substantially vertically in the assembly position, and joins the strengthening means 1 to the body 7 by means of a plurality of joins 21. Said joins 21 are preferably located in a mid portion of said central sector 11, as shown in Figure 1. The join is made with an essentially vertical surface of a strut of the vehicle, a strut being a bodywork element located above a longitudinal member whose main function is to absorb energy in the event of a frontal impact.

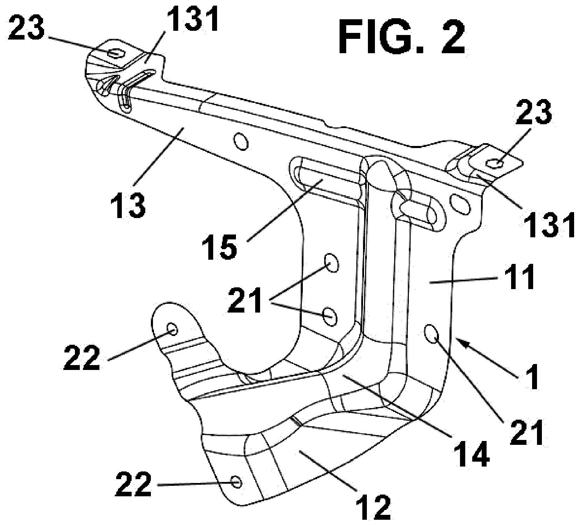

The lower sector 12 is arranged substantially horizontally or slightly inclined and contiguous with the central sector 11, and joins the strengthening means 1 to the bumper 8 and to the mudguard 9 by means of a plurality of joins 22. As shown in particular in Figure 2, the lower sector 12 and the central sector 11 respectively comprise mutually intersecting surfaces, more specifically forming an obtuse angle. This helps increase the rigidity of the unit in the event of a lateral impact on the outer surfaces of the mudguard 9 and/or bumper 8.

The mudguard 9 has an outer surface used to join same to the strengthening means 1, and the lower sector 12 is substantially perpendicular to the outer surface of the mudguard 9 in the joining zone between the mudguard 9 and the strengthening means 1.

The bumper 8 has an outer surface used to join same to the strengthening means 1, and the lower sector 12 is substantially perpendicular to the outer surface of the bumper 8 in the joining zone between the bumper 8 and the strengthening means 1, the join being made via an intermediate part 16.

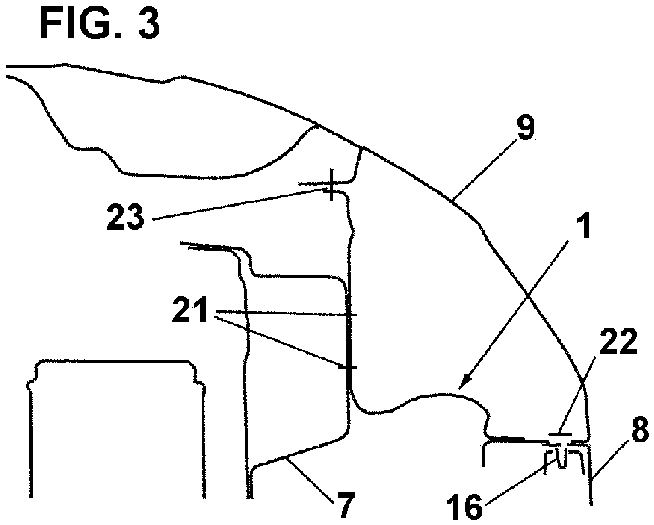

As shown in the cross section in Figure 3, the lower sector 12 is substantially parallel and contiguous with a flap of the mudguard 9 and with a flap of the bumper 8, thereby facilitating the join between said components. The flaps of the mudguard 9 and of the bumper 8 are substantially perpendicular to the respective outer surfaces of same in the joining zone to the lower sector 12. This provides greater control over the clearance between the bumper 9 and the mudguard 8, thereby improving the external finish.

Furthermore and as shown in Figure 3, the join between the bumper 8 and the strengthening means 1 is made using an intermediate part 16. This intermediate part 16 is able to distribute any forces in the join throughout the entire surface of the intermediate part 16. This is particularly advantageous for a mechanical link made using a screwed join 22 between a plastic bumper 8 and metal strengthening means 1.

The upper sector 13 is elongate and substantially perpendicular and contiguous with the central sector 11 in a zone of the central sector 11 opposite the lower sector 12, such that the mudguard 9 is also joined to the strengthening means 1 via the upper sector 13 by means of a plurality of joins 23.

The upper sector 13 also has at least one horizontal tab 131 that is substantially perpendicular to the central sector 11, the mudguard 9 being joined to the strengthening means 1 via the at least one horizontal tab 131, and the joins 23 preferably being positioned close to the end of this horizontal tab 131. This creates a mechanical link between the mudguard 9 and the strut of the body 7 via the strengthening means 1. Specifically and as shown in Figure 1, the join is made on the essentially horizontal surface of the strut, said surface coming into contact with the at least one horizontal surface 131.

It should be noted that the joins 21, 22, 23 maybe any suitable type of join, such as screwed joins.

Furthermore and as shown in Figure 2, the strengthening means 1 comprises a structural element 14 arranged in the central sector 11 and in the lower sector 12. This structural element 14 is for example a profile arranged along the central sector 11 and the lower sector 12 in a substantially vertical direction in the assembly position. This helps to increase the rigidity of the strengthening means 1 in the event of lateral impact on the vehicle.

The strengthening means 1 also has at least one controlled breaking zone 15 arranged between the central sector 11 and the upper sector 13, as shown in Figure 2. For example, said at least one controlled breaking zone 15 is a substantially horizontal fold, in the assembled position.

This controlled breaking zone 15 is designed to deform under the slightest force in the event of the vehicle accidentally impacting a pedestrian. Thus, the strengthening means 1 provides rigidity and force-transmission capacity to the body 7 of the vehicle, while advantageously including zones able to minimize potential injury caused to a pedestrian in the event of frontal impact.

Although reference has been made to a specific embodiment of the invention, it is obvious for a person skilled in the art that numerous variations and modifications may be made to the support system described, and that all of the details mentioned may be replaced by other technically equivalent details without thereby moving outside the scope of protection defined by the attached claims.

## Claims

1. Support system for a frontal structure of a vehicle, in which the vehicle comprises:
- a body (7),
- a bumper (8),
- a mudguard (9), in which the mudguard (9) is made of metal, and
wherein the support system comprises strengthening means (1) for joining the mudguard (9) to the body (7) of the vehicle,
the strengthening means (1) also joining the bumper (8) to the body (7) of the vehicle, and the strengthening means (1) being formed from a single piece,
**characterized in that** the strengthening means (1) comprises a central sector (11) and the strengthening means (1) is joined to the body (7) of the vehicle by the central sector (11).

2. Support system for a frontal structure of a vehicle according to Claim 1, **characterized in that** the strengthening means (1) is made of metal.

3. Support system for a frontal structure of a vehicle according to Claim 1, **characterized in that** the strengthening means (1) comprises a lower sector (12), in which the lower sector (12) is positioned beside the central sector (11) such that the bumper (8) and the mudguard (9) are joined to the strengthening means (1) via the lower sector (12).

4. Support system for a frontal structure of a vehicle according to Claim 3, **characterized in that** the lower sector (12) and the central sector (11) lie along mutually intersecting surfaces.

5. Support system for a frontal structure of a vehicle according to Claim 3, **characterized in that** the mudguard (9) has an outer surface, so that the lower sector (12) is substantially perpendicular to the outer surface of the mudguard (9) in the joining zone between the mudguard (9) and the strengthening means (1).

6. Support system for a frontal structure of a vehicle according to Claim 3, **characterized in that** the bumper (8) comprises an outer surface, and the lower sector (12) is substantially perpendicular to the outer surface of the bumper (8) in the joining zone between the bumper (8) and the strengthening means (1).

7. Support system for a frontal structure of a vehicle according to Claims 1 and 3, **characterized in that** the strengthening means (1) comprises an upper sector (13), in which the upper sector (13) is positioned beside the central sector (11) in a zone of the central sector (11) opposite the lower sector (12), and the mudguard (9) is also joined to the strengthening means (1) by the upper sector (13).

8. Support system for a frontal structure of a vehicle according to Claims 1 and 3, **characterized in that** the strengthening means (1) comprises a structural element (14) arranged in the central sector (11) and in the lower sector (12).

9. Support system for a frontal structure of a vehicle according to Claim 8, **characterized in that** the structural element (14) is a profile arranged along the central sector (11) and the lower sector (12).

10. Support system for a frontal structure of a vehicle according to Claims 1 and 7, **characterized in that** the strengthening means (1) comprises at least one controlled breaking zone (15) arranged between the central sector (11) and the upper sector (13).

11. Support system for a frontal structure of a vehicle according to Claim 10, **characterized in that** the at least one controlled breaking zone (15) is a substantially horizontal fold.

12. Support system for a frontal structure of a vehicle according to Claim 7, **characterized in that** the upper sector (13) comprises at least one horizontal tab (131) that is substantially perpendicular to the central sector (11), and the mudguard (9) is joined to the strengthening means (1) using the at least one horizontal tab (131).

13. Support system for a frontal structure of a vehicle according to Claim 3, **characterized in that** the join between the bumper (8) and the strengthening means (1) in the lower sector (12) is made using an intermediate part (16).

14. Support system for a frontal structure of a vehicle according to Claim 1, **characterized in that** the join between the strengthening means (1) and the body (7) of the vehicle, the join between the strengthening means (1) and the bumper (8), and the join between the strengthening means (1) and the mudguard (9) are made by means of at least one screwed join.

## Patentansprüche

1. Stützsystem für einen Frontaufbau eines Fahrzeugs, wobei das Fahrzeug Folgendes umfasst:
- einen Aufbau (7),
- einen Stoßfänger (8),
- ein Schutzblech (9), wobei das Schutzblech (9) aus Metall hergestellt ist, und
wobei das Stützsystem ein Versteifungsmittel (1) umfasst, um das Schutzblech (9) mit dem Aufbau (7) des Fahrzeugs zu verbinden,
wobei das Versteifungsmittel (1) außerdem den Stoßfänger (8) mit dem Aufbau (7) des Fahrzeugs verbindet und das Versteifungsmittel (1) aus einem einzelnen Stück gebildet ist,
**dadurch gekennzeichnet, dass** das Versteifungsmittel (1) einen mittleren Abschnitt (11) umfasst und das Versteifungsmittel (1) durch den mittleren Abschnitt (11) mit dem Aufbau (7) des Fahrzeugs verbunden ist.

2. Stützsystem für einen Frontaufbau eines Fahrzeugs nach Anspruch 1, **dadurch gekennzeichnet, dass** das Versteifungsmittel (1) aus Metall hergestellt ist.

3. Stützsystem für einen Frontaufbau eines Fahrzeugs nach Anspruch 1, **dadurch gekennzeichnet, dass** das Versteifungsmittel (1) einen unteren Abschnitt (12) umfasst, wobei der untere Abschnitt (12) auf eine solche Weise neben dem mittleren Abschnitt (11) positioniert ist, dass der Stoßfänger (8) und das Schutzblech (9) über den unteren Abschnitt (12) mit dem Versteifungsmittel (1) verbunden sind.

4. Stützsystem für einen Frontaufbau eines Fahrzeugs nach Anspruch 3, **dadurch gekennzeichnet, dass** der untere Abschnitt (12) und der mittlere Abschnitt (11) entlang sich gegenseitig schneidenden Flächen liegen.

5. Stützsystem für einen Frontaufbau eines Fahrzeugs nach Anspruch 3, **dadurch gekennzeichnet, dass** das Schutzblech (9) eine Außenfläche aufweist, so dass der untere Abschnitt (12) in dem Verbindungsbereich zwischen dem Schutzblech (9) und dem Versteifungsmittel (1) im Wesentlichen rechtwinklig zu der Außenfläche des Schutzblechs (9) verläuft.

6. Stützsystem für einen Frontaufbau eines Fahrzeugs nach Anspruch 3, **dadurch gekennzeichnet, dass** der Stoßfänger (8) eine Außenfläche umfasst und der untere Abschnitt (12) in dem Verbindungsbereich zwischen dem Stoßfänger (8) und dem Versteifungsmittel (1) im Wesentlichen rechtwinklig zu der Außenfläche des Stoßfängers (8) verläuft.

7. Stützsystem für einen Frontaufbau eines Fahrzeugs nach Anspruch 1 und 3, **dadurch gekennzeichnet, dass** das Versteifungsmittel (1) einen oberen Abschnitt (13) umfasst, wobei der obere Abschnitt (13) in einem dem unteren Abschnitt (12) gegenüberliegenden Bereich des mittleren Abschnitts (11) neben dem mittleren Abschnitt (11) positioniert ist und das Schutzblech (9) außerdem durch den oberen Abschnitt (13) mit dem Versteifungsmittel (1) verbunden ist.

8. Stützsystem für einen Frontaufbau eines Fahrzeugs nach Anspruch 1 und 3, **dadurch gekennzeichnet, dass** das Versteifungsmittel (1) ein Bauelement (14) umfasst, das in dem mittleren Abschnitt (11) und in dem unteren Abschnitt (12) angeordnet ist.

9. Stützsystem für einen Frontaufbau eines Fahrzeugs nach Anspruch 8, **dadurch gekennzeichnet, dass** das Bauelement (14) ein Profil ist, das entlang dem mittleren Abschnitt (11) und dem unteren Abschnitt (12) angeordnet ist.

10. Stützsystem für einen Frontaufbau eines Fahrzeugs nach Anspruch 1 und 7, **dadurch gekennzeichnet, dass** das Versteifungsmittel (1) wenigstens eine kontrollierte Sollbruchstelle (15) umfasst, die zwischen dem mittleren Abschnitt (11) und dem oberen Abschnitt (13) angeordnet ist.

11. Stützsystem für einen Frontaufbau eines Fahrzeugs nach Anspruch 10, **dadurch gekennzeichnet, dass** die wenigstens eine kontrollierte Sollbruchstelle (15) ein im Wesentlichen horizontaler Falz ist.

12. Stützsystem für einen Frontaufbau eines Fahrzeugs nach Anspruch 7, **dadurch gekennzeichnet, dass** der obere Abschnitt (13) wenigstens eine horizontale Lasche (131) umfasst, die im Wesentlichen rechtwinklig zu dem mittleren Abschnitt (11) verläuft und das Schutzblech (9) unter Verwendung der wenigstens einen horizontalen Lasche (131) mit dem Versteifungsmittel (1) verbunden ist.

13. Stützsystem für einen Frontaufbau eines Fahrzeugs nach Anspruch 3, **dadurch gekennzeichnet, dass** die Verbindung zwischen dem Stoßfänger (8) und dem Versteifungsmittel (1) in dem unteren Abschnitt (12) unter Verwendung eines Zwischenstücks (16) hergestellt ist.

14. Stützsystem für einen Frontaufbau eines Fahrzeugs nach Anspruch 1, **dadurch gekennzeichnet, dass** die Verbindung zwischen dem Versteifungsmittel (1) und dem Aufbau (7) des Fahrzeugs, die Verbindung zwischen dem Versteifungsmittel (1) und dem Stoßfänger (8) und die Verbindung zwischen dem Versteifungsmittel (1) und dem Schutzblech (9) mittels wenigstens einer Schraubverbindung hergestellt sind.

## Revendications

1. Système de support pour une structure frontale d'un véhicule, dans lequel le véhicule comprend:
- une carrosserie (7),
- un pare-chocs (8),
- un garde-boue (9), dans lequel le garde-boue (9) est constitué de métal, et
dans lequel le système de support comprend des moyens de renforcement (1) pour joindre le garde-boue (9) à la carrosserie (7) du véhicule,
les moyens de renforcement (1) joignent également le pare-chocs (8) à la carrosserie (7) du véhicule, et les moyens de renforcement (1) sont constitués d'une seule pièce,
**caractérisé en ce que** les moyens de renforcement (1) comprennent un secteur central (11) et les moyens de renforcement (1) sont joints à la carrosserie (7) du véhicule par le secteur central (11).

2. Système de support pour une structure frontale d'un véhicule selon la revendication 1, **caractérisé en ce que** les moyens de renforcement (1) sont constitués de métal.

3. Système de support pour une structure frontale d'un véhicule selon la revendication 1, **caractérisé en ce que** les moyens de renforcement (1) comprennent un secteur inférieur (12), dans lequel le secteur inférieur (12) est positionné à côté du secteur central (11) de telle sorte que le pare-chocs (8) et le garde-boue (9) soient joints aux moyens de renforcement (1) par l'intermédiaire du secteur inférieur (12).

4. Système de support pour une structure frontale d'un véhicule selon la revendication 3, **caractérisé en ce que** le secteur inférieur (12) et le secteur central (11) s'étendent le long de surfaces se coupant mutuellement.

5. Système de support pour une structure frontale d'un véhicule selon la revendication 3, **caractérisé en ce que** le garde-boue (9) présente une surface extérieure, de telle sorte que le secteur inférieur (12) soit sensiblement perpendiculaire à la surface extérieure du garde-boue (9) dans la zone de jonction entre le garde-boue (9) et les moyens de renforcement (1) .

6. Système de support pour une structure frontale d'un véhicule selon la revendication 3, **caractérisé en ce que** le pare-chocs (8) présente une surface extérieure, et le secteur inférieur (12) est sensiblement perpendiculaire à la surface extérieure du pare-chocs (8) dans la zone de jonction entre le pare-chocs (8) et les moyens de renforcement (1).

7. Système de support pour une structure frontale d'un véhicule selon les revendications 1 et 3, **caractérisé en ce que** les moyens de renforcement (1) comprennent un secteur supérieur (13), dans lequel le secteur supérieur (13) est positionné à côté du secteur central (11) dans une zone du secteur central (11) opposée au secteur inférieur (12), et le garde-boue (9) est également joint aux moyens de renforcement (1) par le secteur supérieur (13).

8. Système de support pour une structure frontale d'un véhicule selon les revendications 1 et 3, **caractérisé en ce que** les moyens de renforcement (1) comprennent un élément structural (14) qui est agencé dans le secteur central (11) et dans le secteur inférieur (12).

9. Système de support pour une structure frontale d'un véhicule selon la revendication 8, **caractérisé en ce que** l'élément structural (14) est un profilé qui est agencé le long du secteur central (11) et du secteur inférieur (12).

10. Système de support pour une structure frontale d'un véhicule selon les revendications 1 et 7, **caractérisé en ce que** les moyens de renforcement (1) comprennent au moins une zone de rupture contrôlée (15) qui est agencée entre le secteur central (11) et le secteur supérieur (13).

11. Système de support pour une structure frontale d'un véhicule selon la revendication 10, **caractérisé en ce que** ladite au moins une zone de rupture contrôlée (15) est un pli sensiblement horizontal.

12. Système de support pour une structure frontale d'un véhicule selon la revendication 7, **caractérisé en ce que** le secteur supérieur (13) comprend au moins une languette horizontale (131) qui est sensiblement perpendiculaire au secteur central (11), et le garde-boue (9) est joint aux moyens de renforcement (1) en utilisant ladite au moins une languette horizontale (131) .

13. Système de support pour une structure frontale d'un véhicule selon la revendication 3, **caractérisé en ce que** la jonction entre le pare-chocs (8) et les moyens de renforcement (1) dans le secteur inférieur (12) est réalisée en utilisant une partie intermédiaire (16) .

14. Système de support pour une structure frontale d'un véhicule selon la revendication 1, **caractérisé en ce que** la jonction entre les moyens de renforcement (1) et la carrosserie (7) du véhicule, la jonction entre les moyens de renforcement (1) et le pare-chocs (8), et la jonction entre les moyens de renforcement (1) et le garde-boue (9) sont réalisées au moyen d'au moins une jonction vissée.
